# FASCICULE DE BREVET EUROPEEN

(11) **EP 0 822 047 B1**
(45) Date de publication et mention de la délivrance du brevet: **23.10.2002**
(21) Numéro de dépôt: 97111937.5
(22) Date de dépôt: 14.07.1997
(51) Int. Cl.: B29C 33/38, B29D 30/10, B29D 30/12

(54) **Noyau destructible, utilisable notamment pour l'assemblage d'un pneu**
Zerstörbarer Dorn, insbesondere verwendbar für die Reifenherstellung
Destructible core particularly useful for manufacturing tyres

(30) Priorité: 01.08.1996 FR 9609856
(43) Date de publication de la demande: 04.02.1998
(73) Titulaire: Conception et Développement Michelin, 1762 Givisiez (CH)
(72) Inventeur: Essinger, Olivier, 1752 Villars-Sur-Glane (CH); Laurent, Daniel, 1723 Marly (CH)
(74) Mandataire: Bauvir, Jacques

(56) Documents cités:
- EP-A- 0 008 012
- EP-A- 0 715 947
- DE-A- 1 934 465
- FR-A- 1 456 231
- FR-A- 2 640 188
- GB-A- 2 284 173

## Description

L'invention propose un noyau destructible pour la fabrication d'objets creux de formes diverses, notamment de pièces creuses ne pouvant pas être démoulées. En particulier, l'invention propose un noyau de forme approximativement toroïdale, définissant la cavité interne d'un pneu, pour la fabrication d'un pneu à une forme identique ou très proche de la forme telle que figée par la vulcanisation.

De tels noyaux ont déjà été proposés dans l'état de la technique, en particulier dans le domaine des pneus. On peut citer les noyaux rigides réalisés en métal, qui sont divisés en plusieurs pièces pour pouvoir être extraits de l'intérieur du pneu après vulcanisation de celui-ci. On peut aussi citer la demande de brevet EP 0 685 321 qui décrit un dispositif comportant une membrane en caoutchouc armé, susceptible de se comporter comme un noyau rigide pendant l'assemblage d'un pneu en caoutchouc à partir de ses constituants de base, et capable de s'escamoter hors du pneu en plissant ladite membrane armée. On peut encore citer la demande EP 0 715 947, qui décrit un noyau pouvant contenir des billes de verre et stabilisé par le vide.

Tous ces dispositifs apportent des solutions satisfaisantes sur le plan technique. Toutefois, leur fabrication est assez longue et coûteuse. L'invention a pour objectif de proposer les moyens de disposer d'un noyau substantiellement rigide, qui se prête très bien à la fabrication de pneus, mais qui peut avoir des applications plus larges.

L'invention propose un procédé de fabrication d'un objet quelconque, consistant à, à chaque cycle de fabrication d'un nouvel objet, :
- créer une cavité, de volume et de forme prédéterminés, d'une part en introduisant une nouvelle quantité de matière formant une membrane que l'on dispose sur la surface de moulage d'un premier moule, ladite surface de moulage ayant une ouverture, et au moyen d'autre part d'un support fermant ladite ouverture et étant en contact avec ladite membrane sur toute la périphérie de l'ouverture, pour définir un espace clos à l'intérieur dudit support et de ladite membrane,
- remplir à refus tout le volume de ladite cavité d'une matière solide fluidisable,
- rendre rigide ladite matière fluidisable, et démouler pour libérer un noyau rigide et solidaire dudit support, contenant ladite matière fluidisable rendue rigide, tout en maintenant ledit noyau par le support,
- utiliser ledit noyau rigide solidaire du support pour fabriquer un objet tout en maintenant ledit noyau par le support, le noyau définissant une surface dite interne dudit objet,
- rendre fluide et extraire ladite matière fluidisable pour détruire le noyau et séparer ledit objet et la membrane du support, et récupérer ladite matière pour la fabrication d'un prochain objet.

A titre d'exemple d'une matière fluidisable, on peut citer une matière pulvérulente, que l'on rend rigide en créant une dépression dans ledit espace clos pour plaquer la membrane contre ladite matière et que l'on rend fluide en supprimant la dépression.

Dans la mise en oeuvre du procédé proposée, on plaque ladite membrane contre ladite matière sous l'effet d'un vide crée dans ledit espace clos, ce qui rend rigide ladite matière fluidisable, et on extrait ladite matière après avoir cassé ledit vide, ce qui rend à nouveau fluide ladite matière. Le principe utilisé consiste à emprisonner, dans une membrane très mince et étirable, une matière de remplissage ayant par exemple l'allure d'un sable fin, puis à faire le vide pour obtenir une forme rigide. Des billes de petit diamètre, par exemple compris entre 0.1 mm et 0.5 mm, constituent une matière de remplissage convenable. On utilise par exemple des billes en verre, creuses ou pleines, d'un diamètre de l'ordre de 0.2 mm. Une telle matière peut très facilement être rendue suffisamment fluide pour en faciliter l'écoulement, par exemple en choisissant et/ou en conditionnant de façon judicieuse le fluide dans lequel ladite matière baigne.

Une membrane convenable est par exemple constituée par un film plastique. Un type de film convenable est par exemple une feuille de Nylon de 50 micromètres d'épaisseur. Bien entendu, le choix précis du matériau constituant la membrane dépend de l'application visée. La membrane est dite étirable parce qu'elle peut s'adapter à la forme que l'on souhaite donner au noyau. L'étirement qu'elle subit peut entraîner une déformation permanente. Pour disposer la membrane à la surface de moulage du premier moule, on peut procéder de la façon suivante : dérouler une feuille de matière étirable constituant ladite membrane, recouvrir la surface dudit support et fixer ladite membrane sur tout le pourtour de celui-ci, ce qui définit un espace clos entre support et membrane, fermer ledit premier moule autour de l'ensemble support et membrane pour créer ladite cavité de volume et de forme prédéterminés, du côté dudit support sur lequel la membrane a été montée, plaquer la membrane contre la paroi dudit premier moule. On peut étirer la membrane jusqu'à l'amener au contact du premier moule après la fermeture du premier moule et avant de remplir ledit volume, en soumettant ledit espace clos à une élévation de pression. L'étirage peut être facilité par exemple par une élévation de température.

Dans le cas de l'application aux pneus en caoutchouc, le film choisi doit être compatible avec une utilisation à la température de vulcanisation du pneu. En outre, le caoutchouc constituant la peau intérieure du pneu doit pouvoir adhérer suffisamment sur le noyau au cours de sa dépose. selon la méthode de dépose choisie. Comme exemple d'une telle méthode, on peut citer par exemple l'enroulement de rubans de caoutchouc cru de façon adéquate sur et autour du noyau.

Un avantage de l'invention est-de pouvoir disposer d'un noyau dans un délai très court à compter du moment où le concepteur de l'objet à fabriquer en a défini la forme. Dans le cas de pneus, il est très aisé de réaliser le premier moule par tournage. Dans le cas plus particulier de pneus dont le rapport de la hauteur du flanc divisée par le diamètre au seat est assez élevé, l'invention permet de réaliser un noyau qui peut être utilisé très facilement pour de tels pneus car la destruction du noyau ne pose pas de problème plus particulier, contrairement au démontage d'un noyau rigide réalisé en plusieurs pièces massives, qu'il est alors difficile de retirer en les faisant passer par le faible espace disponible à l'intérieur du pneu.

Un autre avantage de l'invention est de proposer les moyens de créer un noyau sur lequel on puisse construire à la forme finale un pneu ou un bandage élastique non gonflé ou non pneumatique. Quant au support, après les étapes du procédé de fabrication citées ci-dessus, on peut soit séparer l'objet et la membrane dudit support pour réutiliser ledit support dans un prochain cycle de fabrication d'un objet (le support fait partie d'une machine), ou bien le support constitue, après la fabrication de l'objet, une partie intégrante de celui-ci et, dans ce cas, le support est renouvelé à chaque fabrication dudit objet. Par exemple, il est fabriqué sur la même installation. Dans ce cas, on fabrique un pneu accroché définitivement à sa jante, ou bien un bandage lié définitivement à sa jante ou à tout organe (jouant le rôle de support dans la présente invention) permettant l'accrochage mécanique à une roue ou à un organe rotatif, tout en pouvant obtenir une cavité pneumatique fermée lors de la fabrication du pneu ou du bandage.

Dans son application au pneu, le support est par exemple une jante sur le côté radialement extérieur de laquelle on monte ladite membrane. On fixe les bords de la membrane sur tout le pourtour de ladite jante, en deux zones d'ancrage latérales annulaires, de façon à définir ledit espace clos du côté radialement extérieur de ladite jante, entre la jante et la membrane. Le noyau obtenu est toroïdal. On l'utilise comme noyau interne autour duquel on fabrique et on moule un pneu. Le moulage de la surface dite extérieure dudit pneu est obtenu au moyen d'un second moule. A la fin du moulage du pneu, on ouvre et on escamote ledit second moule.

L'invention propose aussi une installation de fabrication d'un noyau, dont la forme exacte est dictée par l'application envisagée. Une telle installation comporte :
- un réservoir capable de contenir une matière solide fluidisable,
- des moyens pour manipuler un premier moule dont la surface de moulage définit au moins partiellement la surface extérieure dudit noyau, ladite surface de moulage ayant une ouverture,
- des moyens pour pouvoir maintenir un support et le libérer,
- des moyens pour fabriquer une membrane étanche que l'on dispose sur ladite surface de moulage du premier moule, et pour créer une cavité, de volume et de forme prédéterminés, en fermant ladite ouverture au moyen dudit support, pour définir un espace clos entre le support et la membrane,
- des moyens pour transvaser ladite matière depuis le réservoir vers ledit espace clos, et inversement, de façon à ce que ladite matière puisse occuper tout le volume de ladite cavité,
- des moyens pour rendre rigide ladite matière pour créer un noyau solidaire du support.

Afin de confectionner une membrane étanche, l'invention propose un mode de réalisation dans lequel on utilise un distributeur de film étirable permettant à chaque cycle le nouvel apport de matière formant la membrane. L'installation comporte par exemple des moyens pour dérouler le film et pour confectionner et fixer de façon étanche le film à la périphérie dudit support de façon à créer ladite membrane et disposer d'un ensemble comprenant le support et la membrane, ledit espace clos étant défini entre support et membrane, et dans laquelle les moyens pour manipuler un premier moule amènent ce premier moule en contact avec ledit support et créent ainsi une cavité de volume et de forme prédéterminés, du côté dudit support où se trouve ladite membrane.

La matière solide dont il s'agit est dite « fluidisable » car il convient qu'elle puisse s'écouler pour la transvaser. La fluidisation peut impliquer un traitement quelconque selon la nature de ladite matière, par exemple un traitement thermique (alliages à bas point de fusion). Afin de favoriser l'écoulement de ladite matière, les moyens pour transvaser comprennent des moyens pour faire varier la pression régnant dans ledit espace clos par rapport à la pression régnant dans ledit réservoir. C'est ainsi qu'une pressurisation du réservoir, combinée à une mise à l'atmosphère ou mise sous vide de l'espace clos, favorise l'écoulement de billes de verre baignant dans l'air. Bien entendu, on peut remplacer l'air par d'autres types de fluides, pourvu qu'ils constituent un moyen adéquat pour rendre la matière de remplissage utilisée suffisamment fluide.

On obtient ainsi un noyau servant de base pour la fabrication d'un objet quelconque, ledit noyau comportant :
- un support comportant un orifice de mise sous pression, et/ou à l'atmosphère et/ou de prise de vide qui peut être sélectivement fermé ou ouvert, ledit support comportant en outre une canalisation la traversant et comportant une vanne qui peut être sélectivement fermée ou ouverte, la canalisation aboutissant à un orifice auquel on peut brancher de façon amovible une tuyauterie,
- une membrane étirable montée sur le pourtour dudit support, fixée de façon étanche à la périphérie dudit support de façon à créer un ensemble comprenant le support et la membrane, ledit ensemble délimitant un espace clos entre support et membrane,
- une matière fluidisable remplissant à refus ledit espace clos, ladite membrane étant plaquée contre ladite matière sous l'effet d'une dépression maintenue dans ledit espace clos.

La suite de la description illustre l'invention dans son application à la fabrication de pneu en caoutchouc, sans que cela puisse en limiter la portée. Dans ce cas, ledit noyau est un noyau sensiblement toroïdal utilisé pour la fabrication d'un pneu, et dans laquelle ledit support est une jante comportant une partie médiane, par exemple sensiblement cylindrique, reliant deux zones d'ancrage latérales annulaires. Les bords de la jante constituent des zones d'ancrages latérales annulaires. La jante ressemble ainsi à ce qu'il est convenu d'appeler une jante en une seule pièce, par analogie avec la terminologie en usage pour les roues de véhicules. Cependant, on peut aussi, par exemple pour des raisons de commodité d'installation de la membrane, recourir à une jante en deux parties, dont les bords comportant les zones d'ancrage sont mobiles axialement l'un par rapport à l'autre.

L'invention sera mieux comprise par la description qui va suivre, d'un exemple donné à titre non limitatif, en se référant au dessin annexé sur lequel :
la figure 1 montre le début de la construction du noyau, à deux stades différents dans la demi vue du haut et la demi vue du bas ;
la figure 2 illustre le remplissage du noyau par la matière de remplissage ;
les figures 3 et 4 montrent schématiquement l'installation utilisée pour fabriquer un tel noyau,
les figures 5 à sont des vues du noyau à différents stades ultérieurs, montrant la construction du noyau, son utilisation dans la fabrication d'un pneu, puis son démantèlement,
les figures 8 et 9 montrent l'utilisation d'une jante en deux parties pour fabriquer un noyau.

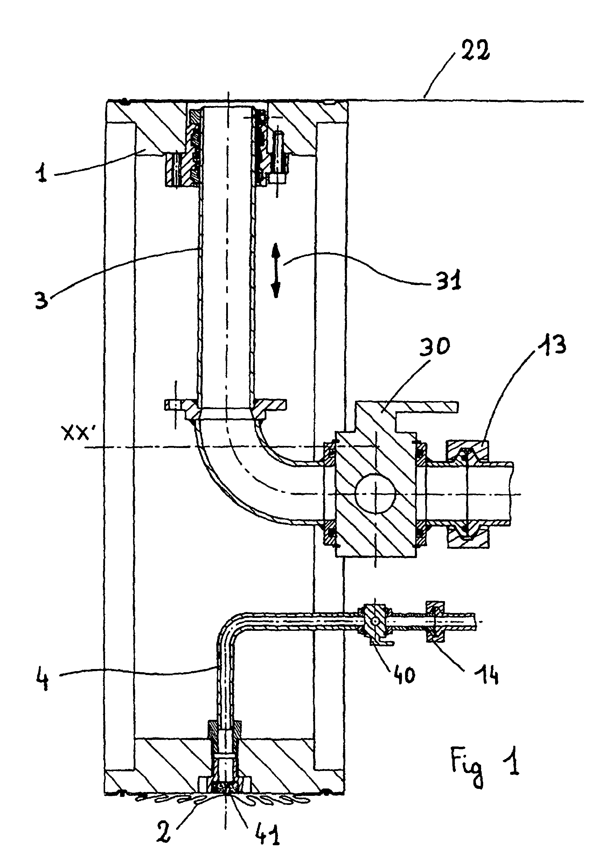

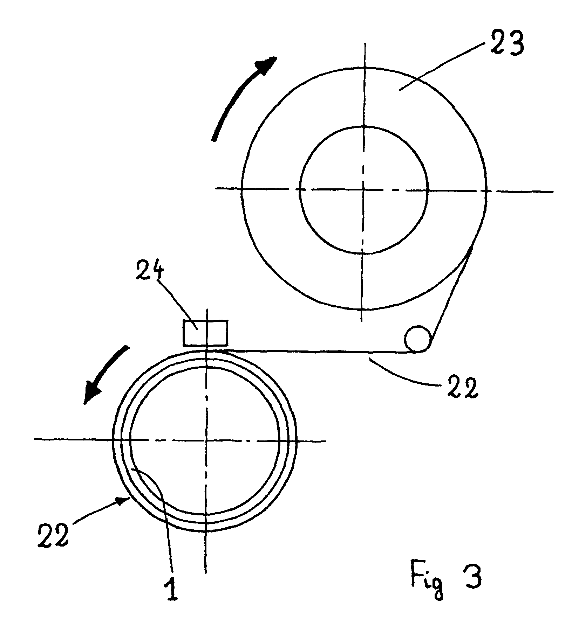

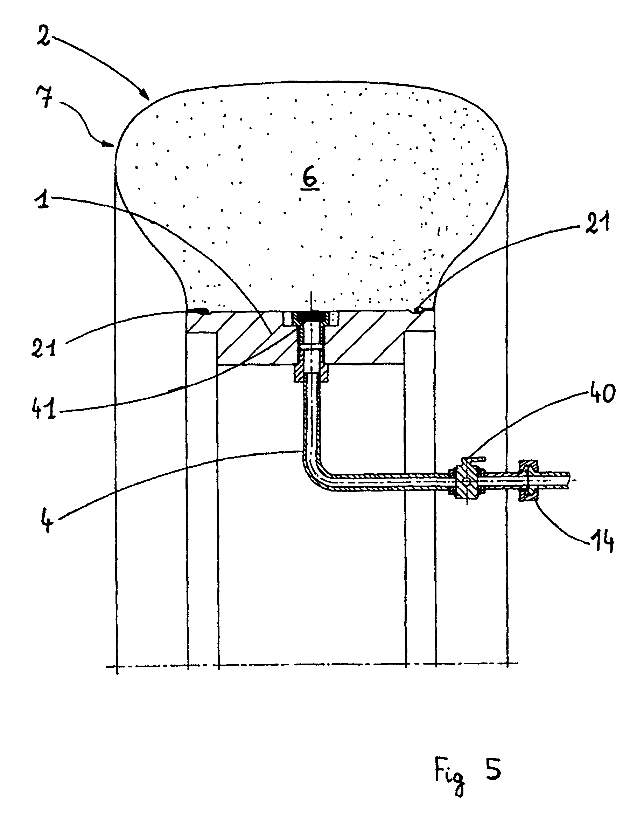

On voit à la figure 1 une jante 1 et une membrane étirable 2. La largeur du film 22 utilisé (voir figure 3) pour confectionner ladite membrane. tel qu'il apparaît à la partie supérieure de la figure 1. est comprise entre la largeur de la jante et la longueur développée d'une corde appliquée contre le noyau à construire, maintenue dans un plan radial, augmentée d'un excédant de longueur autorisant ou facilitant la fixation sur la jante 1. Autrement dit, la valeur maximale de ladite largeur correspond au périmètre méridien de la membrane 2, tel qu'on le voit dans une coupe du noyau à la figure 5.

La jante 1 comporte une canalisation 3, escamotable radialement, équipée d'une vanne 30, débouchant sur un orifice auquel on peut brancher une tubulure par une bride 13. Par cette canalisation, on peut à la demande introduire ou extraire les billes de verre. La canalisation peut donc être branchée à la jante (c'est à dire plus généralement au support) et coulisse par rapport à celle-ci comme schématisé par la flèche 31 de façon à ce que son sommet 32 puisse soit affleurer à la surface radialement extérieure de la jante 1, soit faire protubérance par rapport à ladite surface d'une hauteur prédéterminée. On entend par « affleurer » une disposition dans laquelle ladite canalisation est escamotée de façon à ne faire aucune protubérance par rapport à la surface de la jante, afin de ne pas gêner l'installation de la membrane. Bien entendu, cela couvre aussi une disposition dans laquelle la canalisation serait même en retrait par rapport à la surface de la jante. La jante 1 comporte aussi au moins une canalisation fixe 4, équipée d'une vanne 40 et d'un filtre de mise à l'air 41 qui laisse passer l'air dans les deux sens (ou le fluide dans lequel baigne ladite matière), mais empêche l'écoulement des billes de verre, ou plus généralement arrête l'écoulement de la matière fluidisable choisie. Cette canalisation 4 aboutit à un orifice auquel on peut brancher une tubulure par une bride 14. Dans cette réalisation, la canalisation 4 sert à la fois de prise de vide, de prise d'air comprimé, et de mise à l'atmosphère. Plus généralement, elle permet de soumettre l'espace clos à n'importe quel niveau de pression ou de dépression requis. Une telle jante, comportant une canalisation escamotable, présente un intérêt quel que soit le type de membrane utilisé, même pour une membrane installée à demeure sur les zones d'ancrage latérales.

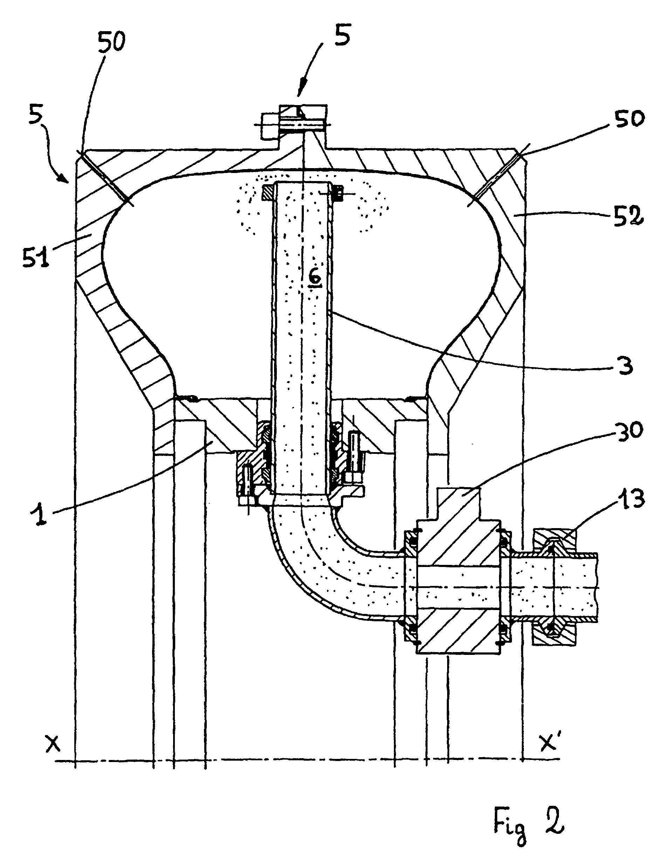

Un premier moule 5 (figure 2), constitué de deux coquilles 51 et 52, représente le négatif du noyau à fabriquer. Sa surface intérieure correspond sensiblement à la surface de la cavité interne du pneu que l'on veut assembler. Le moule 5 est équipé d'au moins un évent 50. Ce premier moule est ainsi formé par deux pièces de révolution ayant une ligne de jonction située dans un plan perpendiculaire à l'axe du pneu, ledit plan étant tel que ladite ligne de jonction correspond au plus grand périmètre qu'un tel plan peut contenir. Il est utilisé ici dans une installation dans laquelle lesdits moyens pour manipuler le moule assurent un mouvement axial relatif entre chacune des deux pièces et entre chaque pièce et la jante.

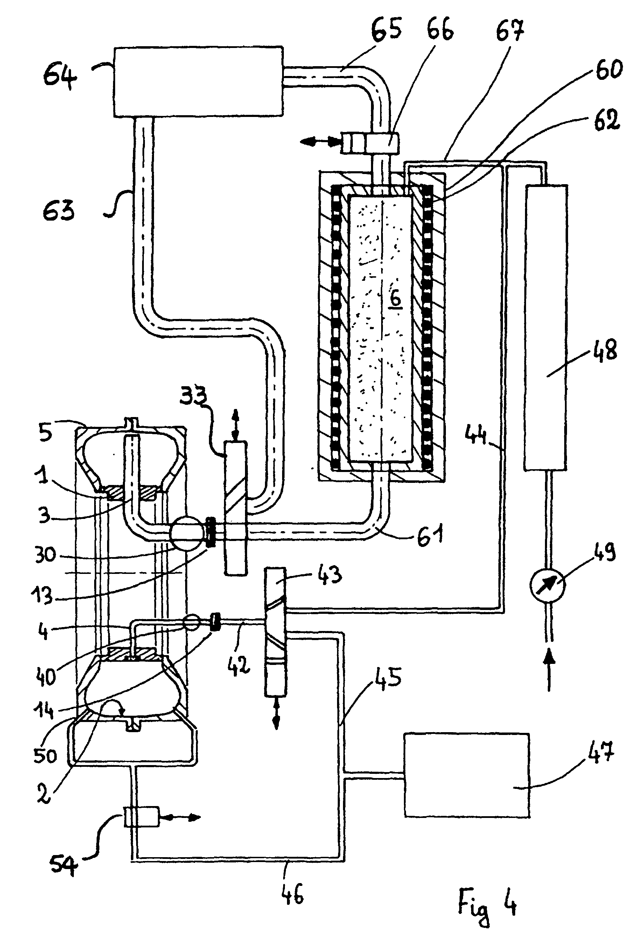

On consultera plus particulièrement les figures 3 et 4 pour avoir un aperçu général des périphériques utilisés pour faire circuler les billes de verre 6. On note tout d'abord à la figure 3 les moyens permettant de construire une membrane étirable : un distributeur de film comportant une bobine 23 de film 22, ainsi qu'un dispositif 24 de coupe et de soudage de ce film. Dans la partie de l'installation illustrée à la figure 4, on voit un réseau d'air (air comprimé et/ou vide) et un réseau de circulation des billes de verre 6. Celles-ci sont contenues dans un réservoir 60. Le réservoir est régulé en température par un fluide adéquat circulant dans un réseau périphérique 62. Un tuyau 61 part du fond du réservoir 60 pour rejoindre l'espace à remplir via une vanne à trois positions 33. Afin de faciliter l'écoulement des billes, ledit réservoir 60 est situé de préférence plus haut que le point le plus bas de la canalisation d'acheminement vers l'intérieur de la cavité à remplir. Un circuit de récupération des billes de verre 6 est branché en dérivation sur le tuyau 61. Ce circuit comporte un tuyau 63, un aspirateur 64, et un tuyau 65 acheminant les billes de verre en haut du réservoir 60. On voit encore une vanne d'isolation 66 située sur ledit tuyau 65.

Revenons maintenant sur le réseau d'air. Un tuyau achemine l'air comprimé en provenance par exemple d'un réseau d'atelier via un régulateur de pression 49. On voit un réchauffeur d'air 48, délivrant l'air au réservoir 60 par un tuyau 67. L'air comprimé est aussi acheminé vers une vanne de sélection 43 à quatre positions, via un tuyau 44. La vanne de sélection 43 permet soit de mettre l'espace clos contenu entre la jante 1 et la membrane 2 en communication avec la source d'air comprimé, ou le vide, ou avec l'atmosphère, ou de maintenir isolé. On voit encore un tuyau 42 reliant ladite vanne de sélection 43 à la vanne 40, donc à l'espace clos. La vanne de sélection 43 est également branchée à une pompe à vide 47 via un tuyau 45. Le ou les évents 50 sont également branchés à la même pompe à vide 47 par un tuyau 46 et une vanne d'isolation 54.

Le fonctionnement de l'installation est le suivant. On commence par confectionner une membrane. A cette fin et dans cet exemple, on prélève une longueur adéquate de film pour l'enrouler autour de la jante 1. Après avoir bobiné au moins un tour du film sur la jante 1, on actionne un dispositif 24 de soudure et coupe qui réalise une soudure suffisamment étanche à l'air des extrémités du tronçon de film prélevé. On forme ainsi un manchon 20 qui entoure la jante 1 (figure 1). L'un des bords latéraux du manchon 20 est fixé sur un premier bord de la jante 1, par exemple par un premier cerceau 21 réalisé par un fil de fer soudé bout à bout ou côte à côte ou dont les extrémités sont torsadées. Ensuite, le manchon 20 est plissé selon la direction axiale pour pouvoir fixer l'autre bord du manchon 20 sur l'autre bord de la jante 1. La fixation de la membrane 2 sur la jante 1 doit être suffisamment étanche à l'air pour permettre la mise sous un vide suffisant de l'espace clos défini par le manchon 20 et la jante 1. Du moins, le niveau de vide doit rester suffisant tant que le noyau ainsi construit doit rester suffisamment ferme. La durée exacte est fonction de l'application visée. Bien entendu, on peut aussi maintenir en fonctionnement une pompe à vide pendant tout ou partie du temps d'utilisation du noyau afin de compenser en permanence un éventuel débit de fuite au travers de la membrane ou de ses fixations sur la jante.

Ensuite, les coquilles 51 et 52 sont amenées en contact avec la jante 1, de façon à délimiter un espace que l'on va remplir de billes de verre. La membrane 2 est d'abord déployée à l'intérieur de la cavité. Sous les effets conjugués d'une pressurisation de l'espace compris entre la jante 1 et la membrane 2, par la canalisation 40, et d'une éventation de l'espace compris entre la membrane 2 et le moule 5, par le ou les évents 50, la membrane 2 s'étire et se plaque contre la paroi du moule 5. Eventuellement, on peut favoriser l'éventation grâce à une mise sous vide via les évents 50. La canalisation 3 est alors déployée jusqu'à ce que son sommet 32 soit proche de la paroi du moule 5, comme montré en figure 2.

Comme il est commode que le remplissage de la cavité se fasse en partie au moins sous l'effet de la gravité, il est important à partir de ce stade que l'ensemble soit disposé à axe XX' horizontal, le sommet 32 de la canalisation 3 étant en haut. La matière de remplissage peut ainsi déborder par le sommet 32 et retomber dans tout le volume de la cavité à remplir sans être gênée par la matière déjà présente dans ladite cavité. Dans ce but, lesdits moyens pour maintenir la jante permettent de la positionner à axe horizontal, la jante étant immobilisée de sorte que sa position angulaire amène et maintient la canalisation soit en haut pour la raison indiquée ci-dessus, soit en bas pour l'extraction des billes, comme cela sera explicité plus loin. En agissant sur les vannes adéquates, on met sous pression le réservoir 60 et on met à l'atmosphère l'espace à remplir de billes de verre. Pendant ce temps, on maintient en dépression la surface du moule 5 (via le ou les évents 50) pour que la membrane 2 reste plaquée contre le moule 5. Les billes de verre 6 s'écoulent depuis le réservoir jusque dans la cavité, qu'elles remplissent totalement. Selon la matière de remplissage utilisée et/ou selon le conditionnement préalable de ladite matière, il peut s'avérer utile de faire vibrer l'ensemble moule 5 et jante 1 pendant le remplissage.

Le remplissage étant terminé, on isole ledit espace clos contenant les billes de verre 6, on y fait le vide, en agissant sur la vanne de sélection 43, tout en mettant les évents à l'atmosphère. La membrane 2 est aspirée contre les billes de verre 6 et forme ainsi avec les billes 6 une masse ferme, pour procurer un noyau sensiblement rigide. On peut alors isoler et déconnecter l'ensemble moule 5 et jante 1 de l'installation tout en maintenant le vide dans l'espace clos contenant les billes de verre 6. On ouvre le moule 5, ce qui libère le noyau 7 fabriqué sur la jante 1 (figure 5).

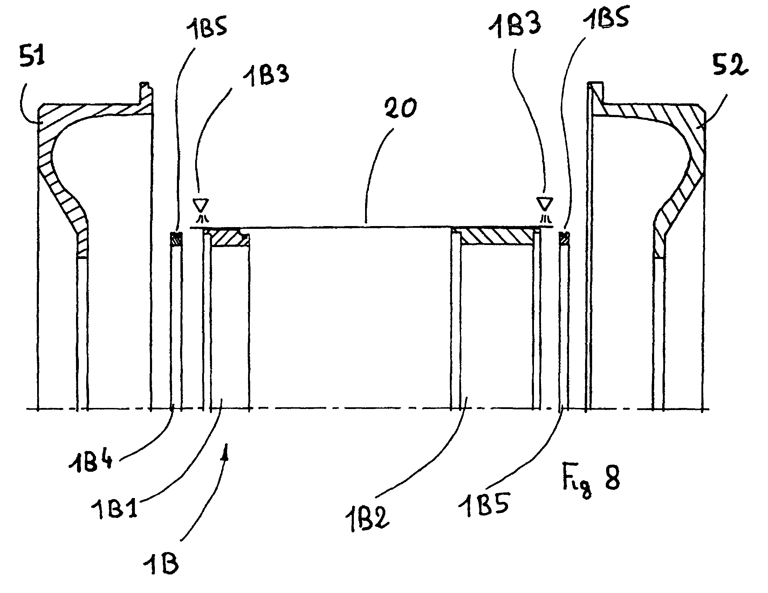

A la figure 8, on a représenté une variante de réalisation du noyau dans laquelle le support est procuré par une jante 1B formée de deux demi-jantes 1B1 et 1B2, axialement séparables. Les zones d'ancrage latérales annulaires sont aménagées sur chacune des demi-jantes et sont constituées par des dégagements aménagés sur le bord axialement extérieur et radialement intérieur de ladite jante, coopérant avec des anneaux 1B4 et 1B5 pour pincer les bords de ladite membrane. L'étanchéité entre demi-jantes et anneaux peut être favorisée par des joints toriques tels que ceux 1BS montés sur les anneaux. Au départ, les demi-jantes 1B1 et 1B2 sont séparées l'une de l'autre. On forme un manchon 20 qui entoure les demi-jantes 1B1 et 1B2 d'une manière similaire à ce qui a été expliqué ci-dessus. La fixation à la jante est cependant différente. A l'aide de buses 1B3 soufflant de l'air comprimé sur toute la périphérie, les bords du manchon 20 sont rabattus de part et d'autre des demi-jantes 1B1 et 1B2. Les anneaux 1B4 et 1B5 peuvent alors être amenés au contact des demi-jantes 1B1 et 1B2. Il faut ensuite pouvoir rapprocher les demi-jantes 1B1 et 1B2 sans pincer le film constituant le manchon 20. L'installation est conçue de façon à ce que le manchon 20 décolle des demi-jantes 1B1 et 1B2 pendant le rapprochement des demi-jantes 1B1 et 1B2 auxquelles les bords du manchon sont dorénavant fixés (sous l'effet d'une certaine pression interne), ou bien l'installation comporte des buses permettant de souffler sur le manchon par l'intérieur pendant le rapprochement axial.

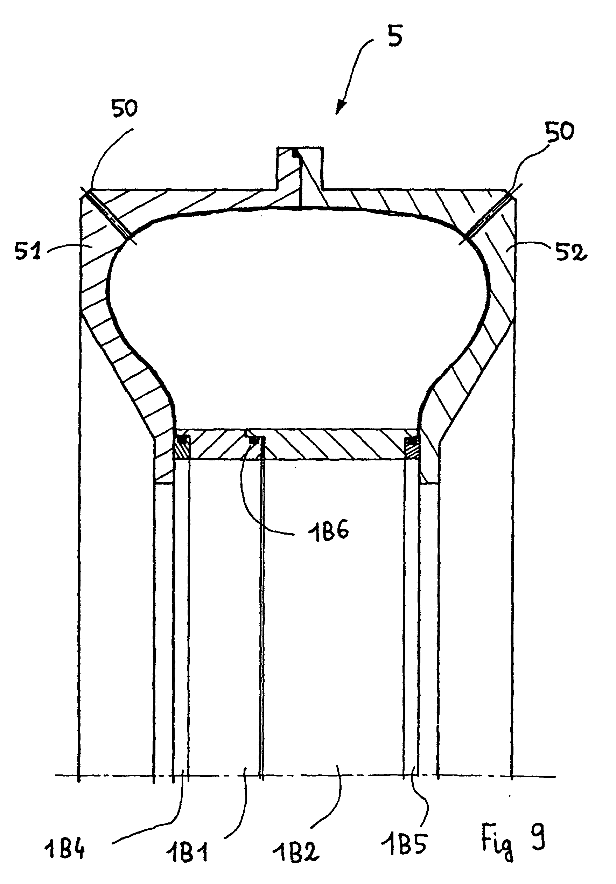

Ensuite, on se retrouve dans une configuration similaire au premier mode de réalisation. Les coquilles 51 et 52 sont en contact avec la jante 1B (figure 9) pour délimiter un espace clos que l'on va remplir de billes de verres. Un joint 1B6 assure l'étanchéité entre les demi-jantes 1B1 et 1B2. Tous les autres aspects sont communs avec la première variante, notamment l'existence de canalisations 3 et 4 non représentées pour ne pas surcharger inutilement les dessins.

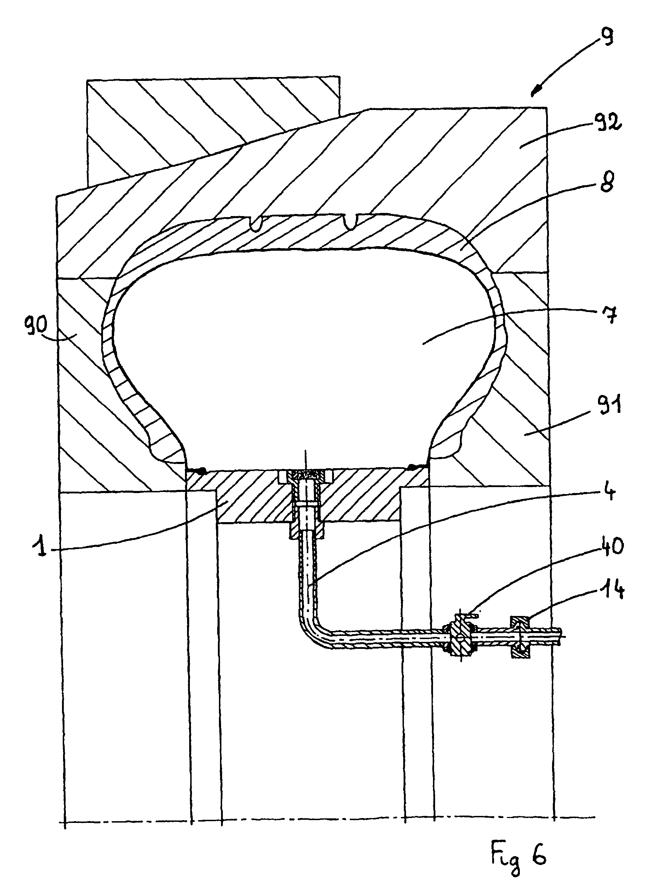

L'exemple décrit concernant la fabrication d'un pneu en caoutchouc, on procède donc à ce stade à l'assemblage du pneu cru en apportant sur et autour dudit noyau tous les constituants selon divers procédés adéquats qui ne forment pas en soi l'objet de la présente invention. On obtient ainsi un pneu S cru, recouvrant le noyau 7, comme représenté à la figure 6.

L'assemblage dudit pneu S étant terminé, on peut fermer autour de celui-ci un moule extérieur 9, constitué par exemple classiquement d'éléments 90 et 91 moulant les flancs et d'éléments 92 moulant la bande de roulement (figure 6). La vulcanisation du pneu peut se dérouler. Notons que celle-ci peut être menée à volume imposé si l'on utilise le noyau tel quel dans l'étape de vulcanisation, et/ou à pression imposée si au cours de l'étape de vulcanisation, on supprime le vide régnant dans l'espace clos interne et on soumet ledit espace clos à une pression régulée de façon adéquate. Dans ce dernier cas, après fermeture du second moule et avant l'ouverture du second moule, le vide régnant dans ledit espace clos étant coupé, la pression interne de vulcanisation est transmise par un fluide agissant par l'intérieur de l'espace clos.

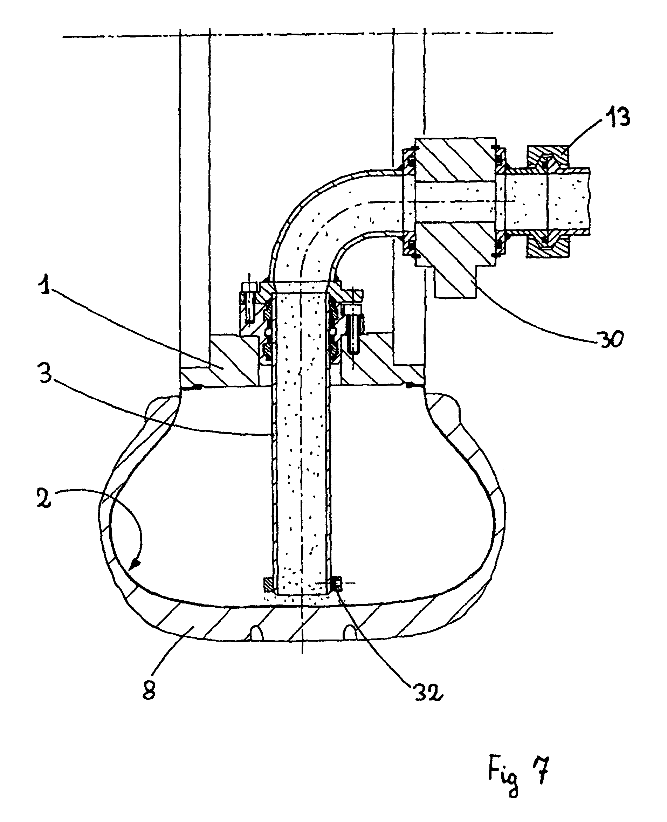

On va maintenant décrire la phase de destruction du noyau 7, celle-ci pouvant intervenir au cours de la vulcanisation, donc avant ouverture du second moule, ou bien après la vulcanisation, donc après ouverture du second moule. Le noyau 7, supportant le pneu, est de nouveau branché à l'installation illustrée à la figure 4, par les brides 13 et 14 accouplées aux canalisations 3 et 4. Les billes de verre 6 vont être aspirées par la canalisation 3, grâce à l'aspirateur 64 qui les renvoie à l'intérieur du réservoir 60. Pour cela, au moins pendant la phase d'aspiration, l'axe XX' est de préférence horizontal et le sommet 32 de la canalisation en bas (figure 7). La vanne 40 est ouverte et la vanne de sélection 43 met l'espace clos à l'atmosphère ou en communication avec la source d'air comprimé.

Ensuite, la canalisation 3 est escamotée radialement. Le pneu 8 pourra être séparé de la jante 1, ce qui peut se faire par découpe de la membrane à un endroit proche de sa fixation sur la jante, ou en retirant les anneaux 1B4 et 1B5 dans la seconde variante. A ce stade, la membrane peut être enlevée de l'intérieur du pneu ou bien être laissée comme emballage et protection du pneu jusqu'à la livraison de celui-ci, ou bien ladite membrane peut être laissée définitivement à l'intérieur du pneu, contribuant ainsi à la protection de sa paroi interne en cas de roulage à plat et/ou contribuant à l'étanchéité de la peau intérieure du pneu, ou apportant d'autres propriétés utiles à cet endroit du pneu. Le cycle de fabrication suivant débute par la constitution d'une nouvelle membrane.

Dans l'exemple illustrant l'invention, la matière de remplissage étant constituée par des billes de verre, sa conductibilité thermique est très faible. Le remplissage par des billes de verre 6 laisse beaucoup de vide à l'intérieur du noyau 7. Le noyau est ainsi par nature très peu conducteur de la chaleur. Notamment si la vulcanisation est menée tout en laissant le pneu sur le noyau 7, on peut souhaiter que le noyau 7 soit à une température assez élevée, pour ne pas qu'il absorbe une partie trop importante des calories apportées par le moule 9 lors de la vulcanisation, et en même temps suffisamment basse pour ne pas provoquer une vulcanisation trop rapide du caoutchouc déposé sur le noyau pendant l'assemblage du pneu. On sait en effet qu'il est souhaitable d'éviter de vulcaniser avant que le caoutchouc ne soit soumis à un certain niveau de pression. Par ailleurs, comme l'élévation de température des mélanges de caoutchouc proches du noyau ou en contact avec celui-ci peut être plus lente, selon la capacité calorifique spécifique de la matière utilisée, on peut de préférence adapter la formulation desdits mélanges pour ne pas augmenter le temps total de vulcanisation du pneu. A cette fin, on peut utiliser un système de vulcanisation très rapide, comme celui décrit dans la demande de brevet EP 0 695 780.

En pratique, selon le présent mode de réalisation, les billes de verre 6 sont préchauffées et maintenues à une température d'environ 100 à 120°C dans le réservoir 60. Le noyau 7 est donc fabriqué à la même température. Bien entendu, puisque la vulcanisation du pneu élève la température de celui-ci à une température bien supérieure, la peau du noyau 7 tendra elle aussi vers une température proche de la température de vulcanisation, celle-ci étant compatible avec un temps de cuisson raisonnable pour le pneumatique. Cependant, étant donné la nature isolante du noyau, le gradient de température à partir de la surface du noyau est très élevé, ce qui fait que l'effet de réchauffement sur la masse de billes de verre 6 contenues dans le noyau 7 reste faible. Dès lors, et ceci constitue un avantage par rapport à l'utilisation de noyaux métalliques, on n'a pas à attendre le temps de refroidissement du noyau après une vulcanisation et avant de réutiliser les mêmes billes pour l'assemblage du pneu suivant.

On a vu que l'invention permet aussi de détruire le noyau au tout début de la vulcanisation ou bien à n'importe quel moment avant la fin de la vulcanisation (donc de la fabrication de l'objet). par exemple dès que le moule extérieur 9 est fermé autour du pneu. Dans ce cas, l'aspiration des billes de verre peut aussi avoir lieu alors que la position du noyau 7 est telle que son axe est vertical. L'aspiration est malgré tout possible en créant un courant d'air radial suffisamment violent pour entraîner toutes les billes hors de l'espace clos. On prévoit par exemple des fentes d'admission d'air sur toute la périphérie de la jante près de son bord situé axialement en haut, et fentes d'évacuation de l'air entraînant les billes sur toute la périphérie de la jante près de son bord situé axialement en bas.

Lorsque la destruction du noyau intervient au tout début de la vulcanisation ou bien à n'importe quel moment avant la fin de la vulcanisation, une pression régulée est appliquée sur le pneu en cours de vulcanisation via la membrane 2. En outre, on peut apporter au pneu des calories par l'intérieur également, en contrôlant la température du fluide à l'intérieur de la membrane 2, au besoin en le faisant circuler. De préférence, on utilise de l'azote ou de l'air convenablement déshydraté. On peut aussi élaborer une loi de vulcanisation dans laquelle la part essentiel de l'énergie de vulcanisation est apportée par l'extérieur. L'invention permet ainsi de bénéficier de l'avantage qu'il y a à construire puis à mouler un pneu cru sur un noyau substantiellement rigide, tout en ménageant la possibilité de vulcaniser à conditions contrôlées de température et de pression auxquelles est soumise la paroi interne du pneu, avec dans le cas de la membrane étirable décrite ici l'avantage d'une barrière thermique négligeable par rapport aux membranes de vulcanisation classiques.

L'invention s'étend ainsi à un procédé de fabrication d'un pneu ou un bandage en caoutchouc vulcanisable, comportant une phase d'assemblage d'une ébauche crue, une phase de moulage et une phase de vulcanisation, dans lequel :
- l'assemblage de l'ébauche est réalisé sur un noyau rigide constitué essentiellement par une matière solide fluidisable enfermée dans un espace clos comportant une membrane définissant la surface sur laquelle on assemble l'ébauche crue, ladite matière étant rendue rigide.
- le moulage est effectuée en refermant autour du noyau supportant l'ébauche un moule comportant d'autres pièces rigides coopérant avec le noyau pour définir la géométrie finale du bandage et définir un volume moulant correspondant substantiellement au volume de l'ébauche crue, de façon à emprisonner l'ébauche et à en mouler toutes les faces,
- puis la vulcanisation est menée à pression régulée en, après moulage de l'ébauche, rendant à nouveau ladite matière fluide, et en soumettant ledit espace clos à l'action de ladite pression régulée.

Dans un mode d'exécution, l'apport des calories nécessaires à la réaction de vulcanisation se fait essentiellement par transfert thermique au travers desdites autres pièces rigides du moule.

En variante, comme déjà évoqué, le principe de fabrication d'un noyau expliqué ci-dessus peut être utilisé pour fabriquer un ensemble dans lequel un pneu est lié à demeure à sa jante. Dans ce cas, la jante 1 n'est plus un élément de la machine de fabrication du pneu mais une pièce réalisée précédemment. Bien entendu, dans ce cas, les canalisations 3 et 4 sont conçues pour être branchées de façon amovible sur des passages prévus à cet effet sur la jante. Le pneu est lié définitivement sur les bords de la jante. L'homme du métier peut imaginer de nombreuses possibilités et il existe d'ailleurs plusieurs solutions connues dans l'état de la technique. On peut citer par exemple la demande de brevet EP 0 603 533 ou bien la demande de brevet DE 32 06 171. Bien entendu, dans ce cas, la membrane 2 reste à demeure dans le pneu ou le bandage élastique sans inconvénient pour celui-ci. De même, que ce soit pour la dernière variante évoquée ou pour la première. le fait qu'il subsiste éventuellement quelques billes de verre dans le pneu n'est d'aucun préjudice pour son fonctionnement.

## Revendications

1. Procédé de fabrication d'un objet quelconque, consistant à, à chaque cycle de fabrication d'un nouvel objet, :
• créer une cavité, de volume et de forme prédéterminés, d'une part en introduisant une nouvelle quantité de matière formant une membrane (2) que l'on dispose sur la surface de moulage d'un premier moule (5), ladite surface de moulage ayant une ouverture, et au moyen d'autre part d'un support (1) fermant ladite ouverture et étant en contact avec ladite membrane sur toute la périphérie de l'ouverture, pour définir un espace clos à l'intérieur dudit support et de ladite membrane,
• remplir à refus tout le volume de ladite cavité d'une matière solide fluidisable (6),
• rendre rigide ladite matière fluidisable, et démouler pour libérer un noyau rigide et solidaire dudit support, contenant ladite matière fluidisable rendue rigide, tout en maintenant ledit noyau par le support,
• utiliser ledit noyau rigide solidaire du support pour fabriquer un objet tout en maintenant ledit noyau par le support, le noyau définissant une surface dite interne dudit objet,
• rendre fluide et extraire ladite matière fluidisable pour détruire le noyau et séparer ledit objet et la membrane du support, et récupérer ladite matière pour la fabrication d'un prochain objet.

2. Procédé selon la revendication 1 dans lequel, pour disposer la membrane à la surface de moulage du premier moule, on procède de la façon suivante :
• dérouler une feuille de matière étirable constituant ladite membrane (2), recouvrir la surface dudit support et fixer ladite membrane (2) sur tout le pourtour de celui-ci, ce qui définit un espace clos entre support et membrane,
• fermer ledit premier moule (5) autour de l'ensemble support et membrane pour créer ladite cavité de volume et de forme prédéterminés, du côté dudit support sur lequel la membrane a été montée,
• plaquer la membrane contre la paroi dudit premier moule.

3. Procédé selon la revendication 2, dans lequel après la fermeture du premier moule et avant de remplir ledit volume, on soumet ledit espace clos à une élévation de pression pour étirer la membrane jusqu'à l'amener au contact du premier moule.

4. Procédé selon l'une des revendications 1 à 3 dans lequel, à chaque cycle de fabrication, on sépare ladite membrane dudit support pour libérer ledit objet et ladite membrane, et on réutilise ledit support pour la fabrication d'un prochain objet.

5. Procédé de fabrication d'un bandage en utilisant le procédé selon l'une des revendications 1 à 4, dans lequel on fabrique ledit objet par dépose des constituants voulus sur le noyau, puis on procède au moulage dudit objet.

6. Procédé de fabrication d'un bandage en utilisant le procédé selon l'une des revendications 1 à 5 dans lequel ladite nouvelle quantité de matière forme une nouvelle membrane (2) non réutilisable et dédiée à l'objet qui va être fabriquée.

7. Procédé de fabrication d'un bandage en utilisant le procédé selon l'une des revendications 1 à 6, dans lequel :
• le support est une jante (1), une feuille formant membrane est fixée sur tout le pourtour de ladite jante sur deux zones d'ancrage latérales annulaires, de façon à définir ledit espace clos du côté radialement extérieur de ladite jante, entre la jante et la membrane, et de façon à libérer un noyau de révolution, solidaire de ladite jante, que l'on utilise comme noyau interne autour duquel on fabrique un bandage,
• mouler ledit bandage sur ledit noyau interne, le moulage de la surface dite extérieure du bandage étant obtenu au moyen d'un second moule (9),
• à la fin du moulage du bandage, on ouvre et on escamote ledit second moule.

8. Procédé selon la revendication 7, utilisé pour fabriquer un bandage en caoutchouc, dans lequel les constituants du bandage sont déposés sur ledit noyau après la libération de celui-ci, pour obtenir un bandage cru, puis ledit second moule est refermé autour du bandage cru recouvrant ledit noyau, pour assurer le moulage et la vulcanisation du bandage.

9. Procédé selon la revendication 8 dans lequel, une dépression ayant été créée dans ledit espace clos pour rendre rigide ladite matière fluidisable, après fermeture du second moule et avant son ouverture, la dépression régnant dans ledit espace clos est relâchée et la pression de vulcanisation est transmise par un fluide agissant par l'intérieur de l'espace clos.

10. Procédé selon la revendication 9, dans lequel la destruction du noyau débute avant l'ouverture du second moule.

11. Procédé de fabrication d'un pneu ou bandage en caoutchouc vulcanisable, comportant une phase d'assemblage d'une ébauche crue, une phase de moulage et une phase de vulcanisation, dans lequel :
• l'assemblage de l'ébauche est réalisé sur un noyau rigide constitué essentiellement par une matière solide fluidisable enfermée dans un espace clos comportant une membrane définissant la surface sur laquelle on assemble l'ébauche crue, ladite matière étant rendue rigide,
• le moulage est effectuée en refermant autour du noyau supportant l'ébauche un moule comportant d'autres pièces rigides coopérant avec le noyau pour définir la géométrie finale du bandage et définir un volume moulant correspondant substantiellement au volume de l'ébauche crue, de façon à emprisonner l'ébauche et à en mouler toutes les faces,
• puis la vulcanisation est menée à pression régulée en, après moulage de l'ébauche, rendant à nouveau ladite matière fluide, et en soumettant ledit espace clos à l'action de ladite pression régulée.

12. Procédé selon la revendication 11, dans lequel l'apport des calories nécessaires à la réaction de vulcanisation se fait essentiellement par transfert thermique au travers desdites autres pièces rigides du moule.

13. Procédé selon l'une des revendications 1 à 12, dans lequel ladite matière fluidisable est une matière pulvérulente que l'on rend rigide en créant une dépression dans ledit espace clos pour plaquer la membrane contre ladite matière et que l'on rend fluide en supprimant la dépression.

14. Procédé selon la revendication 13, dans lequel la matière pulvérulente est constitué par des billes de petit diamètre en matière thermiquement isolante.

15. Installation de construction d'un noyau pour la fabrication d'un objet par dépose sur le noyau, ladite installation comportant :
• un réservoir (60) capable de contenir une matière solide fluidisable (6),
• des moyens pour manipuler un premier moule (5) dont la surface de moulage définit au moins partiellement la surface extérieure dudit noyau, ladite surface de moulage ayant une ouverture,
• des moyens pour pouvoir maintenir un support (1) et libérer ledit support,
• des moyens pour fabriquer une membrane (2) étanche que l'on dispose sur ladite surface de moulage du premier moule (5), et pour créer une cavité, de volume et de forme prédéterminés, en fermant ladite ouverture au moyen dudit support (1), pour définir un espace clos entre le support et la membrane,
• des moyens pour transvaser ladite matière depuis le réservoir vers ledit espace clos, et inversement, de façon à ce que ladite matière puisse occuper tout le volume de ladite cavité,
• des moyens pour rendre rigide ladite matière pour créer un noyau solidaire du support.

16. Installation selon la revendication 15, dans lequel ladite matière fluidisable est une matière pulvérulente que l'on rend rigide en créant une dépression dans ledit espace clos pour plaquer la membrane contre ladite matière et que l'on rend fluide en supprimant la dépression.

17. Installation selon la revendication 16, dans lequel la matière pulvérulente est constitué par des billes de petit diamètre en matière thermiquement isolante.

18. Installation selon l'une des revendications 15 à 17, dans laquelle les moyens pour confectionner une membrane comportent un distributeur de film étirable (22).

19. Installation selon la revendication 18, comportant des moyens pour dérouler le film et pour confectionner et fixer de façon étanche le film à la périphérie dudit support de façon à créer ladite membrane et disposer d'un ensemble comprenant le support et la membrane, ledit espace clos étant défini entre support et membrane, et dans laquelle les moyens pour manipuler un premier moule (5) amènent ce premier moule en contact avec ledit support et créent ainsi une cavité de volume et de forme prédéterminés, du côté dudit support où se trouve ladite membrane.

20. Installation selon l'une des revendications 15 à 19, dans laquelle les moyens pour transvaser comprennent des moyens pour faire varier la pression régnant dans ledit espace clos par rapport à la pression régnant dans ledit réservoir.

21. Installation selon l'une des revendications 15 à 20, dans laquelle ledit noyau est un noyau sensiblement toroïdal utilisé pour la fabrication d'un bandage, et dans laquelle ledit support est une jante (1) comportant une partie médiane reliant deux zones d'ancrage latérales annulaires.

22. Installation selon la revendication 21, dans laquelle les deux zones d'ancrage latérales annulaires sont séparées d'une distance fixe prédéterminée.

23. Installation selon la revendication 22, dans laquelle la jante comporte deux demi-jantes axialement séparables, les zones d'ancrage latérales annulaires étant aménagées sur chacune des demi-jantes.

24. Installation selon l'une des revendications 21 à 23, dans laquelle les moyens pour transvaser comprennent une canalisation (3) pouvant être connectée à ladite jante, ladite canalisation étant escamotable de façon à ce que son sommet (32) puisse soit affleurer la surface de ladite jante, soit faire protubérance par rapport à ladite surface d'une hauteur prédéterminée.

25. Installation selon l'une des revendications 21 à 24, dans laquelle lesdits moyens pour maintenir la jante permettent de la positionner à axe horizontal, la jante étant immobilisée de sorte que sa position angulaire amène la canalisation soit en haut soit en bas.

26. Installation selon l'une des revendications 21 à 25, utilisée avec un premier moule formé par deux pièces de révolution (51, 52) ayant une ligne de jonction située dans un plan perpendiculaire à l'axe du pneu, ledit plan étant tel que ladite ligne de jonction correspond au plus grand périmètre qu'un tel plan peut contenir, installation dans laquelle lesdits moyens pour manipuler le moule assurent en mouvement axial relatif entre chacune des deux pièces et entre chaque pièce et la jante.

27. Installation selon l'une des revendications 15 à 26, dans laquelle les moyens pour confectionner une membrane étanche comprennent un distributeur de film étirable (22), des moyens pour prélever un tronçon de film de longueur prédéterminée hors du distributeur, des moyens pour refermer ledit tronçon sur lui-même de façon étanche pour constituer ainsi un manchon (20), des moyens pour fixer de façon étanche les extrémités latérales dudit manchon sur lesdites zones d'ancrage latérales de la jante.

28. Jante (1) utilisée pour la fabrication d'un noyau servant à la fabrication d'objets sensiblement toroïdaux, ladite jante comportant une partie médiane reliant deux zones d'ancrage latérales annulaires pour fixer les bords d'une membrane étirable de façon à définir un espace clos du côté radialement extérieur de ladite jante entre la jante et la membrane, ladite jante comportant un orifice de passage d'un fluide qui peut être sélectivement fermé ou ouvert, ladite jante comportant en outre une canalisation (3) la traversant et comportant une vanne (30) qui peut être sélectivement fermée ou ouverte, la canalisation aboutissant à un orifice auquel on peut brancher de façon amovible une tuyauterie, ladite canalisation étant escamotable de façon à ce que son sommet (32) puisse soit affleurer la surface radialement extérieure de la jante, soit faire protubérance par rapport à ladite surface d'une hauteur prédéterminée.

29. Jante selon la revendication 28, **caractérisée en ce que** lesdites zones d'ancrage sont séparées d'une distance fixe prédéterminée.

30. Jante selon la revendication 28, **caractérisée en ce qu'**elle comporte deux demi-jantes axialement séparables, les zones d'ancrage latérales annulaires étant aménagées sur chacune des demi-jantes.

31. Jante selon l'une des revendications 28 à 30, dans laquelle les zones d'ancrage latérales annulaires sont constituées par des dégagements aménagés sur le bord axialement extérieur et radialement intérieur de ladite jante, coopérant avec des anneaux pour pincer les bords de ladite membrane.

## Patentansprüche

1. Herstellungsverfahren irgendeines beliebigen Gegenstandes, der, in jedem Schritt der Herstellung eines neuartigen Gegenstandes, besteht aus dem:
• Erzeugen eines Hohlraumes mit vorbestimmtem Volumen und vorbestimmter Form, einerseits, indem man eine neue Materialmenge einleitet, die eine Membran (2) bildet, die man auf der Abformoberfläche eines ersten Formwerkzeugs (5) anordnet, wobei die genannte Abformoberfläche eine Öffnung hat, und andererseits mittels eines Trägers (1), der die genannte Öffnung verschließt und in Berührung mit der genannten Membran auf dem gesamten Umfang der Öffnung steht, um einen geschlossenen Raum im Inneren des genannten Trägers und der genannten Membran festzulegen,
• restlosen Füllen des gesamten Volumens des genannten Hohlraums mit einem fluidisierbaren, festen Material (6),
• zum Erstarren Bringen des genannten, fluidisierbaren Materials und Ausformen, um einen starren und mit dem genannten Träger einstückigen Kern freizusetzen, der das genannte, zum Erstarren gebrachte, fluidisierbare Material enthält, während man gleichzeitig den genannten Kern durch den Träger festhält,
• Verwenden des genannten, starren, mit dem Träger einstückigen Kernes zur Herstellung eines Gegenstandes, während man den genannten Kern durch den Träger festhält, wobei der Kern eine sogenannte Innenoberfläche des genannten Gegenstandes festlegt, und
• Verflüssigen und Entnehmen des genannten, fluidisierbaren Materials, um den Kern zu zerstören und den genannten Gegenstand und die Membran vom Träger abzutrennen, und Wiedergewinnen des genannten Materials für die Herstellung eines nächsten Gegenstandes.

2. Verfahren nach Anspruch 1, worin man zum Anordnen der Membran an der Abformoberfläche des ersten Formwerkzeugs in der folgenden Weise vorgeht:
• Ausrollen einer Bahn bzw. eines Bogens dehnbaren Materials, das die Membran (2) bildet, Abdecken der Oberfläche des genannten Trägers und Befestigen der genannten Membran (2) auf dessen gesamtem Umfang, was einen geschlossenen Raum zwischen dem Träger und der Membran festlegt,
• Schließen des genannten, ersten Formwerkzeugs (5) rund um die Anordnung aus Träger und Membran, um den genannten Hohlraum mit vorbestimmtem Volumen und vorbestimmter Form auf der Seite des genannten Trägers zu erzeugen, auf dem die Membran angebracht wurde, und
• Andrücken der Membran gegen die Wand des genannten, ersten Formwerkzeugs.

3. Verfahren nach Anspruch 2, worin man nach dem Schließen des ersten Formwerkzeugs und vor dem Füllen des genannten Volumens den genannten, geschlossenen Raum einer Druckerhöhung unterzieht, um die Membran zu dehnen, bis man sie in Berührung mit dem ersten Formwerkzeug bringt.

4. Verfahren nach einem der Ansprüche 1 bis 3, worin man in jedem Zyklus der Herstellung die genannte Membran vom genannten Träger abtrennt, um den genannten Gegenstand und die genannte Membran freizusetzen, und man den genannten Träger für die Herstellung eines nächsten Gegenstandes wiederverwendet.

5. Verfahren zur Herstellung einer Reifendecke bzw. Bandage, indem man das Verfahren nach einem der Ansprüche 1 bis 4 anwendet, worin man den genannten Gegenstand durch Auflegen der gewünschten Bestandteile auf den Kern herstellt und dann mit dem Abformen des genannten Gegenstandes fortfährt.

6. Verfahren zur Herstellung einer Reifendecke bzw. Bandage, indem man das Verfahren nach einem der Ansprüche 1 bis 5 anwendet, worin die genannte, neue Materialmenge eine neue Membran (2) formt, die nicht wiederverwendbar ist und für den gerade hergestellten Gegenstand bestimmt ist.

7. Verfahren zur Herstellung einer Reifendecke bzw. Bandage, indem man das Verfahren nach einem der Ansprüche 1 bis 6 anwendet, worin:
• der Träger eine Felge (1) ist, wobei ein die Membran bildender Bogen auf dem gesamten Umfang der genannten Felge in zwei seitlichen, ringförmigen Verankerungszonen befestigt wird, um derart den genannten, geschlossenen Raum auf der radial äußeren Seite der genannten Felge zwischen Felge und Membran festzulegen und derart einen fest mit der genannten Felge verbundenen Rotationskern freizugeben, den man als Innenkern benutzt, rund um den man eine Reifendecke bzw. Bandage herstellt,
• man die genannte Reifendecke bzw. Bandage auf dem genannten Innenkern abformt, wobei die Abformung der sogenannten Außenfläche der Reifendecke bzw. Bandage mittels eines zweiten Formwerkzeugs (9) erzielt wird, und
• man am Ende des Abformens der Reifendecke bzw. Bandage das genannte, zweite Formwerkzeug öffnet und zurückzieht.

8. Verfahren nach Anspruch 7, das verwendet wird, um eine Reifendecke bzw. Bandage aus Gummi herzustellen, worin die Bestandteile der Reifendecke bzw. Bandage auf den genannten Kern nach dessen Freisetzung aufgelegt werden, um eine rohe Reifendecke bzw. Bandage zu erhalten, und das zweite Formwerkzeug dann rund um die rohe Reifendecke bzw. Bandage geschlossen wird und den genannten Kern abdeckt, um das Abformen und die Vulkanisation der Reifendecke bzw. Bandage sicherzustellen.

9. Verfahren nach Anspruch 8, worin nach dem Schließen des zweiten Formwerkzeugs und vor dessen Öffnen ein Unterdruck im genannten, geschlossenen Raum erzeugt wird, um das genannte, fluidisierbare Material zu versteifen, und der Unterdruck, der im genannten, geschlossenen Raum vorliegt, aufgehoben und der Vulkanisationsdruck durch ein Strömungsmittel übertragen wird, das durch das Innere des geschlossenen Raums einwirkt.

10. Verfahren nach Anspruch 9, worin die Zerstörung des Kerns vor dem Öffnen des zweiten Formwerkzeugs beginnt.

11. Verfahren zur Herstellung eines Reifens oder einer Reifendecke bzw. Bandage aus vulkanisierbarem Gummi, mit einem Schritt zum Zusammenbau eines Rohlings, einem Abformschritt und einem Vulkanisationsschritt, worin:
• der Zusammenbau des Rohlings auf einem starren Kern durchgeführt wird, der im wesentlichen durch ein festes, fluidisierbares Material gebildet ist, das in einen geschlossenen Raum eingeschlossen wird, der einen Membran aufweist, die die Oberfläche festlegt, auf der man dem Rohling zusammenbaut, wobei das genannte Material starr gemacht ist,
• die Abformung dadurch bewirkt wird, daß man rund um den Kern, der den Rohling trägt, ein Formwerkzeug schließt, das andere, starre Teile aufweist, die mit dem Kern zusammenwirken, um die endgültige Geometrie der Reifendecke bzw. der Bandage festzulegen und ein Abformvolumen festzulegen, das im wesentlichen dem Volumen des Rohlings entspricht, um derart den Rohling einzuschließen und an diesem alle Flächen zu formen, und
• dann die Vulkanisation unter einreguliertem Druck durchgeführt wird, indem man, nach dem Abformen des Rohlings, das genannte Material erneut fließfähig macht und den genannten, geschlossenen Raum der Einwirkung des genannten, einregulierten Druckes unterzieht.

12. Verfahren nach Anspruch 11, worin das Herbeiführen der zur Vulkansierungsreaktion erforderlichen Wärmemenge im wesentlichen durch Wärmeübertragung über die genannten, anderen, starren Teile des Formwerkzeugs erfolgt.

13. Verfahren nach einem der Ansprüche 1 bis 12, worin das genannte, fluidisierbare Material ein staubförmiges Material ist, das man zum Erstarren bringt, indem man einen Unterdruck im genannten, geschlossenen Raum erzeugt, um die Membran gegen das genannte Material anzudrücken, und man es fließfähig macht, indem man den Unterdruck aufhebt.

14. Verfahren nach Anspruch 13, worin das staubförmige Material von Kugeln kleinen Durchmessers aus wärmeisolierendem Material gebildet ist.

15. Einrichtung zum Aufbau eines Kernes zur Herstellung eines Gegenstandes durch Auflegen auf den Kern, wobei die genannte Einrichtung die folgenden Elemente aufweist:
• einen Vorratsbehälter (60), der imstande ist, ein festes, fluidisierbares Material (6) aufzunehmen,
• Mittel zum Handhaben eines ersten Formwerkzeugs (5), dessen Abformoberfläche mindestens teilweise die Außenoberfläche des genannten Kernes festlegt, wobei die genannte Abformoberfläche eine Öffnung aufweist,
• Mittel, um einen Träger (1) halten und den genannten Träger freigeben zu können,
• Mittel zur Herstellung einer dichten Membran (2), die man auf der genannten Abformoberfläche des ersten Formwerkzeugs (5) anordnet, und zum Erzeugen eines Hohlraums mit vorbestimmtem Volumen und vorbestimmter Form, indem man die genannte Öffnung mittels des genannten Trägers (1) verschließt, um zwischen der Membran und dem Träger einen geschlossenen Raum zu bilden,
• Mittel zum Umfüllen des genannten Materials vom Vorratsbehälter in den genannten, geschlossenen Raum und umgekehrt, so daß auf dieses Material das gesamte Volumen des genannten Hohlraums einnehmen kann, und
• Mittel, um das genannte Material erstarren zu lassen, so daß ein fest mit dem Träger verbundener Kern erzeugt wird.

16. Einrichtung nach Anspruch 15, worin das genannte, fluidisierbare Material ein staubförmiges Material ist, das man erstarren läßt, indem man einen Unterdruck im genannten, geschlossenen Raum erzeugt, um die Membran gegen das genannte Material anzudrücken, und das man fließfähig macht, indem man den Unterdruck aufhebt.

17. Einrichtung nach Ansspruch 16, worin das staubförmige Material von Kugeln mit kleinem Durchmesser aus wärmeisolierendem Material gebildet ist.

18. Einrichtung nach einem der Ansprüche 15 bis 17, worin die Mittel zum Konfektionieren einer Membran eine Ausgabeeinrichtung für dehnbare Folie (22) aufweisen.

19. Einrichtung nach Anspruch 18, mit Mitteln zum Ausrollen der Folie und zum Konfektionieren und dichten Befestigen der Folie auf dem Umfang des genannten Trägers, um auf diese Weise die genannte Membran zu erzeugen und eine Baugruppe bereitzustellen, die den Träger und die Membran aufweist, wobei der genannte geschlossene Raum zwischen dem Träger und der Membran festgelegt ist, und wobei in dieser Mittel zum Handhaben eines ersten Formwerkzeugs (5) dieses erste Formwerkzeug in Berührung mit dem genannten Träger verbringen und so einen Hohlraum mit vorbestimmtem Volumen und vorbestimmter Form auf der Seite des genannten Trägers erzeugen, wo sich die genannte Membran befindet.

20. Einrichtung nach einem der Ansprüche 15 bis 19, worin die Mittel zum Umfüllen Mittel aufweisen, um den Druck, der im genannten, geschlossenen Raum vorherrscht, sich bezüglich des Drucks ändern zu lassen, der im genannten Vorratsbehälter vorherrscht.

21. Einrichtung nach einem der Ansprüche 15 bis 20, worin der genannte Kern ein im wesentlichen torusförmiger Kern ist, der zur Herstellung einer Reifendecke bzw. einer Bandage verwendet wird, und worin der genannte Träger eine Felge (1) ist, die einen mittleren Teil aufweist, der die beiden seitlichen, kreisringförmigen Verankerungszonen verbindet.

22. Einrichtung nach Anspruch 21, worin die beiden seitlichen, kreisringförmigen Verankerungszonen um einen festen, vorbestimmten Abstand getrennt sind.

23. Einrichtung nach Anspruch 22, worin die Felge zwei axial trennbare Halbfelgen aufweist, wobei die seitlichen, ringförmigen Verankerungszonen auf auf jeder der Halbfelgen eingebracht sind.

24. Einrichtung nach einem der Anssprüche 21 bis 23, worin die Mittel zum Umfüllen eine Rohrleitung (3) aufweisen, die an die genannte Felge angeschlossen werden kann, wobei die genannte Rohrleitung derart einziehbar ist, daß ihr Scheitel (32) entweder bündig mit der Oberfläche der genannten Felge abschließen kann oder eine Ausstülpung bezüglich der genannten Oberfläche mit einer vorbestimmten Höhe bilden kann.

25. Einrichtung nach einem der Ansprüche 21 bis 24, worin die genannten Mittel zum Halten der Felge es gestatten, sie mit horizontaler Achse anzuordnen, wobei die Felge derart unbeweglich festgelegt wird, daß ihre Winkelposition die Rohrleitung entweder oben oder unten anordnet.

26. Einrichtung nach einem der Ansprüche 21 bis 25, die mit einem ersten Formwerkzeug verwendet wird, das aus zwei Rotationskörpern (51, 52) gebildet ist, die eine Verbindungslinie aufweisen, die in einer Ebene senkrecht zur Achse des Reifens gelegen ist, wobei die genannte Ebene so verläuft, daß die genannte Verbindungslinie dem größten Durchmesser entspricht, den eine solche Ebene enthalten kann, und wobei in der genannten Einrichtung die genannten Mittel zum Handhaben des Formwerkzeugs eine axiale Relativbewegung zwischen jedem der beiden Teile und zwischen jedem Teil der Felge sicherstellen.

27. Einrichtung nach einem der Ansprüche 15 bis 26, worin die Mittel zum Konfektonieren einer dichten Membran eine Einrichtung zum Ausgeben von dehnbarer Folie (22), Mittel zum Entnehmen eines Stücks Folie mit vorbestimmter Länge aus der Ausgabeeinrichtung, Mittel zum dichten Schließen des genannten Stücks auf sich selbst, um so eine Hülse (20) zu bilden, sowie Mittel zum dichten Befestigen der seitlichen Enden der genannten Hülse auf den genannten Verankerungszonen der Felge aufweisen.

28. Felge (1), die zur Herstellung eines Kernes verwendet wird, der zur Herstellung von im wesentlichen torusförmigen Gegenständen dient, wobei die genannte Felge einen mittleren Teil aufweist, der zwei seitliche, ringförmige Verankerungszonen zum Befestigen einer dehnbaren Membran verbindet, um auf diese Weise einen geschlossenen Raum auf der radial äußeren Seite der genannten Felge zwischen der Felge und der Membran festzulegen, ,die genannte Felge eine Öffnung zum Durchtritt eines Strömungsmittels aufweist, die wahlweise geschlossen oder offen sein kann, die genannte Felge außerdem eine Rohrleitung (3) aufweist, die sie durchquert und ein Ventil (30) aufweist, das wahlweise geschlossen oder offen sein kann, die Rohrleitung an eine Öffnung anstößt, von der abnehmbar eine Verrohrung abzweigt, und die genannte Rohrleitung derart einziehbar ist, daß ihr Scheitel (32) entweder bündig mit der mit der radial äußeren Oberfläche der Felge abschließen oder eine Ausstülpung bezüglich der genannten Oberfläche mit einer vorbestimmten Höhe bilden kann.

29. Felge nach Anspruch 28, **dadurch gekennzeichnet, daß** sie dadurch ausgebildet ist, daß die genannten Verankerungszonen um einen vorbestimmten, festen Abstand getrennt sind.

30. Felge nach Anspruch 28, **dadurch gekennzeichnet, daß** sie zwei axial trennbare Halbfelgen aufweist, wobei die seitlichen, ringförmigen Verankerungszonen auf jeder der Halbfelgen angeordnet sind.

31. Felge nach einem der Ansprüche 28 bis 30, worin die seitlichen, ringförmigen Verankerungszonen von Absätzen gebildet sind, die auf dem axial äußeren und radial inneren Rand der genannten Felge eingebracht sind, die mit Ringen zum Einklemmen der Ränder der genannten Membran zusammenarbeiten.

## Claims

1. A method of manufacturing any object, consisting in, upon each manufacturing cycle of a new object:
• creating a cavity of predetermined volume and shape on the one hand by introducing a new quantity of material forming a membrane (2) which is placed on the moulding surface of a first mould (5), said moulding surface having an opening, and by means, on the other hand, of a support (1) which closes said opening and is in contact with said membrane over the entire periphery of the opening, in order to define a closed space within said support and said membrane,
• filling the entire volume of said cavity to overflow with a fluidisable solid material (6);
• making said fluidisable material rigid and demoulding it in order to release a rigid core which is integral with said support, containing said fluidisable material which has been rendered rigid, while holding said core by the support;
• using said rigid core which is integral with the support to manufacture an object, while holding said core by the support, the core defining a so-called inner surface of said object;
• making said fluidisable material fluid and extracting it in order to destroy the core and separate said object and the material from the support, and recovering said material for the manufacture of a following object.

2. A method according to Claim 1, in which, in order to place the membrane on the moulding surface of the first mould, the procedure is as follows:
• unwinding a sheet of stretchable material constituting said membrane (2), covering the surface of said support and fastening said membrane (2) over the entire periphery thereof, which defines a closed space between the support and membrane,
• closing said first mould (5) around the assembly consisting of support and membrane in order to create said cavity of predetermined volume and shape, from the side of said support on which the membrane has been mounted,
• applying the membrane against the wall of said first mould.

3. A method according to claim 2, in which after the closing of the first mould and before filling said volume, said closed space is subjected to an increase in pressure in order to stretch the membrane so as to bring it in contact with the first mould.

4. A method according to one of claims 1 to 3, in which, during each manufacturing cycle, said membrane is separated from said support in order to release said object and said membrane, and said support is re-used for the manufacture of a following object.

5. A method of manufacturing a solid tyre using the method according to one of claims 1 to 4, in which said object is manufactured by placing the desired components on the core, then moulding said object.

6. A method of manufacturing a solid tyre using the method according to one of claims 1 to 5, in which said new quantity of material forms a new, non-reusable membrane (2) dedicated to the object which is to be manufactured.

7. A method of manufacturing a solid tyre using the method according to one of claims 1 to 6, in which:
• the support is a rim (1), a membrane-forming sheet is fastened on the entire periphery of said rim on two annular lateral anchoring zones, so as to define said closed space on the radially outer side of said rim, between the rim and the membrane, and so as to form a core of revolution, integral with said rim, which is used as an inner core around which a solid tyre is produced,
• moulding said solid tyre on said inner core, the so-called outer surface of the tyre being moulded by means of a second mould (9);
• at the end of the moulding of the solid tyre, opening and withdrawing said second mould.

8. A method according to claim 7, used for manufacturing a solid rubber tyre, in which the components of the tyre are arranged on said core after its release so as to obtain an uncured tyre, then said second mould is closed around the uncured solid tyre covering said core, in order to ensure the moulding and vulcanising of the solid tyre.

9. A method according to claim 8, in which, a partial vacuum having been created in said closed space to render said fluidisable material rigid, after the closing of the second mould and before the opening thereof, the partial vacuum prevailing in said closed space is relaxed and the vulcanisation pressure is transmitted by a fluid acting from the inside of the closed space.

10. A method according to claim 9, in which the destruction of the core commences before the opening of the second mould.

11. A method of manufacturing a pneumatic or solid tyre of vulcanisable rubber, comprising a phase of assembling an uncured blank, a moulding phase, and a vulcanisation phase, in which:
• the assembling of the blank is effected on a rigid core formed essentially of a fluidisable solid material enclosed in a closed space comprising a membrane which defines the surface on which the uncured blank is assembled, said material being made rigid,
• the moulding is effected by closing around the core supporting the blank a mould comprising other rigid parts cooperating with the core in order to define the final geometry of the solid tyre and to define a moulding volume corresponding substantially to the volume of the uncured blank, so as to imprison the blank and mould all the faces thereof,
• the vulcanisation is then carried out under regulated pressure by, after moulding of the blank, making said material fluid again, and subjecting said closed space to the action of said regulated pressure.

12. A method according to claim 11, in which the contribution of the heat necessary for the vulcanisation reaction is effected essentially by thermal transfer through said other rigid parts of the mould.

13. A method according to one of claims 1 to 12, in which said fluidisable material is a powdered material which is made rigid by creating a partial vacuum in said closed space to apply the membrane against said material and which is made fluid by eliminating the partial vacuum.

14. A method according to claim 13, in which the powdered material consists of balls of small diameter of thermally insulting material.

15. An installation for constructing a core for manufacturing an object by placing on the core, said installation comprising:
• a reservoir (60) capable of containing a fluidisable solid material (6);
• means for handling a first mould (5), the moulding surface of which defines, at least in part, the outer surface of said core, said moulding surface having an opening;
• means for enabling holding of a support (1) and releasing said support:
• means for manufacturing an airtight membrane (2) which is placed on said moulding surface of the first mould (5), and for creating a cavity, of predetermined volume and shape, by closing said opening by means of said support (1), so as to define a closed space between the support and the membrane;
• means for transferring said material from the reservoir to said closed space and conversely so that said material can occupy the entire volume of said cavity;
• means for making said material rigid so as to create a core integral with the support.

16. An installation according to claim 15, in which said fluidisable material is a powdered material which is made rigid by creating a partial vacuum in said closed space to apply the membrane against said material and which is made fluid by eliminating the partial vacuum.

17. An installation according to claim 16, in which the powdered material consists of balls of small diameter of thermally insulting material.

18. An installation according to one of claims 15 to 17, in which the means for building a membrane comprise a stretchable film distributor (22).

19. An installation according to claim 18, comprising means for unwinding the film and for building and fastening the film in airtight manner on the periphery of said support so as to create said membrane and provide an assembly comprising the support and the membrane, said closed space being defined between the support and membrane, and in which the means for handling a first mould (5) bring this first mould into contact with said support, thus creating a cavity of predetermined volume and shape on the side of said support where said membrane is located.

20. An installation according to one of claims 15 to 19, in which the transfer means comprise means for varying the pressure prevailing in said closed space as compared with the pressure prevailing in said reservoir.

21. An installation according to one of claims 15 to 20, in which said core is a substantially toroidal core used for the manufacture of a solid tyre, and in which said support is a rim (1) comprising a middle portion connecting two lateral annular anchoring zones.

22. An installation according to claim 21, in which the two lateral annular anchoring zones are separated by a predetermined fixed distance.

23. An installation according to claim 22, in which the rim comprises two axially separable half-rims, the lateral annular anchoring zones being formed on each of the half-rims.

24. An installation according to one of claims 21 to 23, in which the transfer means comprise a conduit (3) which can be connected to said rim, said conduit being retractable such that its end (32) can either be flush with the surface of said rim or protrude by a predetermined height from said surface.

25. An installation according to one of claims 21 to 24, in which said means for holding the rim make it possible to position it with the axis horizontal, the rim being immobilised so that its angular position leads the conduit either upwards or downwards.

26. An installation according to one of claims 21 to 25, used with a first mould formed by two bodies of revolution (51, 52) having a connecting line located in a plane perpendicular to the axis of the tyre, said plane being such that said connecting line corresponds to the largest perimeter that such a plane can contain, in which installation said means for handling the mould ensure relative axial movement between each of the two parts and between each part and the rim.

27. An installation according to one of claims 15 to 26, in which the means for building an airtight membrane comprise a stretchable film distributor (22), means for taking a length of film of a given length from the distributor, means for closing said length on itself in airtight manner to thus form a sleeve (20), and means for fastening the lateral ends of said sleeve to said lateral anchoring zones of the rim in airtight manner.

28. A rim (1) used for manufacturing a core serving for manufacturing substantially toroidal objects, said rim comprising a middle portion connecting two lateral annular anchoring zones for fastening the edges of a stretchable membrane so as to define a closed space on the radially outer side of said rim between the rim and the membrane, said rim comprising an orifice for a fluid to pass through which can be selectivity closed or opened, said rim furthermore comprising a conduit (3) passing through it and comprising a valve (30) which can be selectively closed or open, the conduit leading to an orifice to which a pipeline can be removably connected, said conduit being retractable such that its end (32) can either be flush with the radially outer surface of said rim or protrude by a predetermined height from said surface.

29. A rim according to claim 28, **characterised in that** said anchoring zones are separated by a predetermined fixed distance.

30. A rim according to claim 28, **characterised in that** it comprises two axially separable half-rims, the lateral annular anchoring zones being formed on each of the half-rims.

31. A rim according to one of claims 28 to 30, in which the lateral annular anchoring zones are formed by recesses formed on the axially outer and radially inner edge of said rim, cooperating with rings in order to clamp the edges of said membrane.
